# EUROPÄISCHE PATENTSCHRIFT

(11) **EP 1 125 662 B1**
(45) Veröffentlichungstag und Bekanntmachung des Hinweises auf die Patenterteilung: **14.07.2004**
(21) Anmeldenummer: 01102494.0
(22) Anmeldetag: 05.02.2001
(51) Int. Cl.: B23B 51/02

(54) **Bohrer zum Bohren von Gestein**
Drill to drill stone
Foret à forer de la pierre

(30) Priorität: 14.02.2000 AT 972000
(43) Veröffentlichungstag der Anmeldung: 22.08.2001
(73) Patentinhaber: CERATIZIT Austria Gesellschaft m.b.H., 6600 Reutte /Tirol (AT); Alpen-May-Kestag GmbH, 5021 Salzburg (AT)
(72) Erfinder: Huber, Roland, 6682 Vils (AT); Krenn, Franz, 5301 Eugendorf (AT)
(74) Vertreter: Lohnert, Wolfgang, Dr.

(56) Entgegenhaltungen:
- DE-A- 19 734 093
- US-A- 5 269 387

## Beschreibung

Die Erfindung betrifft eine Schneidplatte gemäβ dem Oberbegriff des Anspruchs 1. Weiterhin betrifft, die Erfindung einen Bohrer zum Bohren von Gestein der mit wenigstens einer Schneidplatte dieser Art bestückt ist. Eine Schneidplatte und ein Bohrer dieser Art sind z.B. aus DE-A-19734093 bekannt.

Bohrer zum Bohren von Gestein bestehen im allgemeinen aus einem zylindrischen Stahlschaft mit wendelförmig verdrillten Nuten zur Abfuhr des ausgebohrten Materials mit einem Einspannende für die Aufnahme in der Bohrmaschine sowie mit einem Bohrkopf am anderen Ende, welcher durch eine oder mehrere mit dem Stahlschaft in der Regel durch Löten verbundene Schneidplatten aus einem verschleißfesten Material wie Hartmetall gebildet wird.

Gefordert wird von derartigen Bohrern einerseits eine möglichst hohe Bohrleistung (Bohrfortschritt/Zeiteinheit) und andererseits eine möglichst hohe Standzeit .

Das Standzeitende des Bohrers wird im allgemeinen durch die maximal zulässige Verschleißmarkenbreite entlang der Schneidkante an den Span- und Freiflächen der stirnseitigen Schneidkanten bestimmt, wobei die maximal zulässige Verschleißmarkenbreite bei etwa 2/3 der Dicke der Schneidplatte liegt.

Die Verschleißmarke entsteht durch Aufrauhung der Span- und Freiflächen aufgrund der Reibung mit den abgetragenen Werkstoffteilchen. Darüber hinaus kommt es durch die Reibung zu hohen Temperaturen im Schneidkantenbereich die zu einer Diffusion von Metallteilchen aus dem Schneidkantenbereich in die abgetragenen Werkstoffteilchen führt. Dadurch wird die Schneidkante geschwächt und bei einem Überschreiten der maximal zulässigen Verschleißmarkenbreite kommt es rasch zu einem Ausfall der Schneidplatte.

Darüber hinaus wird bei Überschreiten der maximal zulässigen Verschleißmarkenbreite und der damit verbundenen unzulässigen Abstumpfung der Schneidkante das Material nur mehr in stark vermindertem Maße abgetragen. Die vom Bohrerwerkzeug eingebrachte Energie wird in erhöhtem Maße durch die vergrößerte Reibung in Wärme umgesetzt, so dass sich der Bohrer bis auf die Temperatur erwärmen kann, bei der das Lot mit dem die Schneidplatte eingelötet ist schmilzt. Ein Auslöten der Schneidplatte und damit ein Ausfall des Bohrers ist die Folge.

Da die Schnittgeschwindigkeiten im Umfangsbereich der Bohrer deutlich größer sind als im Zentrumsbereich sind insbesondere die Schneidkantenbereiche am Umfang der Schneidplatte einem verstärkten Verschleiß ausgesetzt.

Die meist verbreiteten herkömmlichen Bohrer zum Bohren von Gestein weisen als Bohrkopf eine Schneidplatte mit zwei dachförmig aneinandergrenzenden stirnseitigen Schneidkanten auf, die entlang ihres Verlaufs vom Umfang zum Zentrum des Bohrers jeweils einen gleichbleibenden Freiwinkel β und Keilwinkel γ aufweisen.
Der Freiwinkel β liegt dabei üblicherweise im Bereich zwischen 20° und 30°, während der Spanwinkel in der Größenordnung von etwa 60° liegt, so dass sich ein konstanter Keilwinkel zwischen 90° und 100° ergibt.

Bei diesen herkömmlichen Bohrern mit über die Länge der stirnseitigen Schneidkanten gleichbleibenden Freiwinkeln und Keilwinkeln wird das Standzeitende durch das Erreichen der maximal zulässigen Verschleißmarkenbreite am Umfangsbereich der Schneidplatte bestimmt, die aufgrund der höheren Schnittgeschwindigkeit in diesem Bereich viel früher erreicht wird, als im Zentrumsbereich der an sich noch weiterverwendbar wäre.

Das deutsche Gebrauchsmuster DE 298 19 388 U1 beschreibt eine Hartmetallschneidplatte zur Verwendung an einem Gesteinsbohrer, bei welcher der Freiwinkel der stirnseitigen Schneidkante mit zunehmendem Abstand von der Drehachse des Bohrers abnimmt. Durch eine derartige Ausgestaltung wird zwar die Abstützung der Schneidkante, insbesondere am Umfangsbereich des Bohrers verbessert und damit die Gefahr eines Bruches der Schneidplatte verringert.
Aufgrund des großen Keilwinkels wird die maximal zulässige Verschleißmarkenbreite jedoch verhältnismäßig rasch erreicht und die erzielbare Bohrleistung ist nicht sehr groß.

Die Aufgabe der vorliegenden Erfindung ist es daher einen Bohrer zum Bohren von Gestein zu schaffen, der eine hohe Bohrleistung aufweist und bei dem der Zeitraum bis zum Erreichen der maximal zulässigen Verschleißmarkenbreite insbesondere an den umfangsseitigen Bereichen der stirnseitigen Schneidkanten vergrößert wird.

Erfindungsgemäß wird dies dadurch erreicht, dass der Freiwinkel β der Schneidkante zumindest abschnittsweise mit zunehmendem Abstand von der Drehachse D zunimmt und der Keilwinkel γ zumindest abschnittsweise mit zunehmendem Abstand von der Drehachse D abnimmt.

Dadurch wird erreicht, dass durch einen großen Keilwinkel γ im Bereich der Drehachse D des Bohrers eine gute Abstützung der Bohrspitze erreicht wird, während durch den kleineren Keilwinkel γ im Bereich des Bohrerumfangs erreicht wird, dass die maximal zulässige Verschleißmarkenbreite im Vergleich zu bisher bekannten Bohrern mit konstantem Freiwinkel β und Keilwinkel y erst später erreicht wird, so dass es zu einer Vergleichmäßigung des Verschleißes im Zentrum und Umfangsbereich und damit zu einer Erhöhung der Standzeit kommt.

Besonders vorteilhaft ist es, wenn die Zunahme des Freiwinkels β und die Abnahme des Keilwinkels γ mit zunehmendem Abstand von der Drehachse D kontinuierlich erfolgen.
Auf diese Weise wird die Schneidkante gleichmäßig beansprucht. Es kommt zu keinen Belastungsspitzen, die einen vorzeitigen Ausfall der Schneidkante durch Bruch bewirken könnten.

Als besonders vorteilhaft für eine gleichbleibende lange Schneidleistung hat es sich in der Praxis bewährt, im Bereich der Drehachse D des Bohrers einen Freiwinkel β von etwa 30° und einen Keilwinkel γ von etwa 90° und im Bereich des Umfangs des Bohrers einen Freiwinkel β von etwa 40° und einen Keilwinkel γ von etwa 50° vorzusehen.

Besonders häufig und vorteilhaft kommt die erfindungsgemäße Ausgestaltung bei Bohrern zum Einsatz, die mit einer Schneidplatte mit zwei geraden stirnseitigen Schneidkanten, die einen spitzen Winkel δ von etwa 130° miteinander einschließen, ausgestattet sind.

Eine besonders vorteilhafte Variante eines derartigen Bohrers besteht darin, dass die stirnseitige Schneidplatte mit zweiteiligen Schneidkanten mit jeweils einem geraden Mittelabschnitt und einem geraden Umfangsabschnitt ausgeführt ist, wobei der Umfangsabschnitt den Mittelabschnitt in Bohrvorschubrichtung überragt und mit gleicher Neigung wie der Mittelabschnitt verläuft.
Dadurch wird erreicht, dass gezielt der Bereich der Schneidkante der verschleißmäßig am stärksten beansprucht wird, durch zusätzliche Materialanhäufung verstärkt wird.

Im folgenden wird die Erfindung an Hand von Figuren näher erläutert.
Es zeigen:
- Figur 1: eine perspektivische Ansicht des Bohrkopfes eines erfindungsgemäßen Bohrers
- Figur 2: den Bohrkopf nach Figur 1 in Vorderansicht parallel zu den Hauptschneidkanten
- Figur 3: den Bohrkopf nach Figur 1 in Seitenansicht senkrecht zu den Hauptschneidkanten
- Figur 4: den Bohrkopf nach Figur 1 in Draufsicht
- Figur 5: die Schneidplatte nach Figur 4 im Schnitt A-A
- Figur 6: die Schneidplatte nach Figur 4 im Schnitt B-B
- Figur 7: eine Variante einer Schneidplatte für einen erfindungsgemäßen Bohrer in Seitenansicht senkrecht zu den Hauptschneidkanten

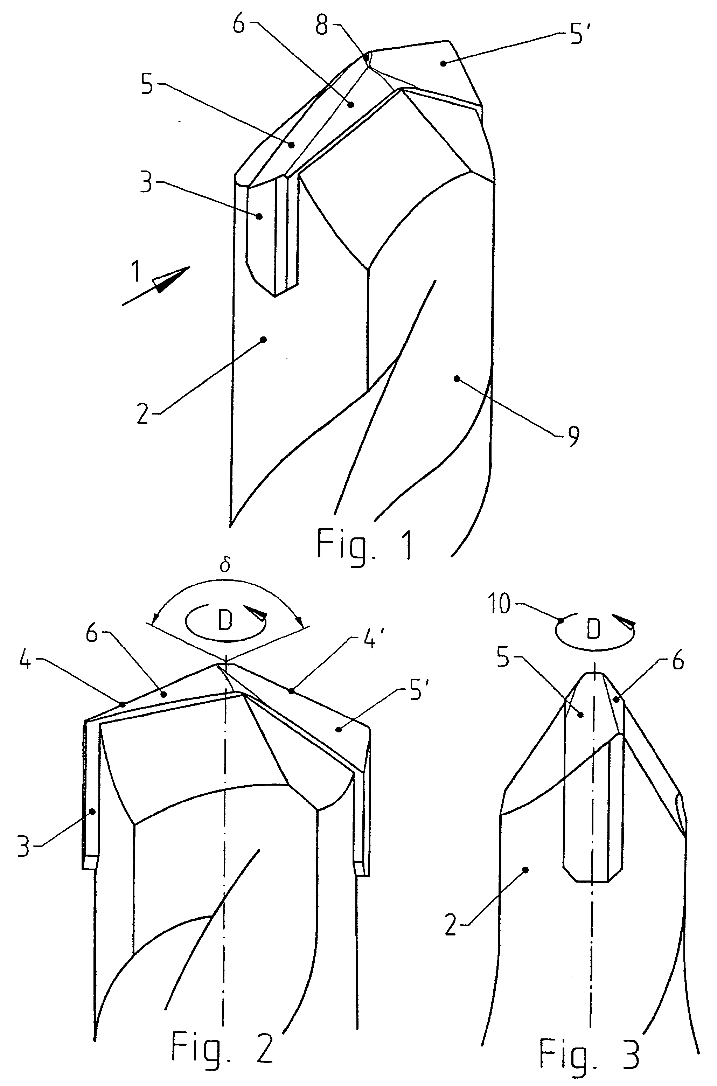

Entsprechend den Figuren 1 bis 6 weist der erfindungsgemäße Bohrer-1- zum Bohren von Gestein einen nur teilweise dargestellten, länglichen Schaft -2- mit wendelförmig verdrillten Nuten -9- zur Abfuhr des ausgebohrten Materials auf. Die Drehrichtung des Bohrers um die Drehachse D ist durch den Pfeil -10-angedeutet. Zur Ausbildung des Bohrkopfes ist das Ende des Schaftes -2- mit einem Schlitz quer zur Drehachse D des Bohrers -1- versehen, in den mit etwas umfangsseitigem Überstand eine Schneidplatte -3- aus Hartmetall eingelötet ist. Die Schneidplatte -3- weist zwei dachförmig aneinandergrenzende, stirnseitige Schneidkanten -4-, -4'- auf, die einen Spitzenwinkel δ von 130° miteinander einschließen. Die Schneidkanten -4-, -4'werden jeweils unter Bildung eines Keilwinkels γ von einer aneinandergrenzenden Freifläche -5-, -5'- und Spanfläche -6-, -6'-, welche mit einer zur Drehachse D senkrechten Ebene E einen Freiwinkel β und einen Spanwinkel α einschließen, gebildet.

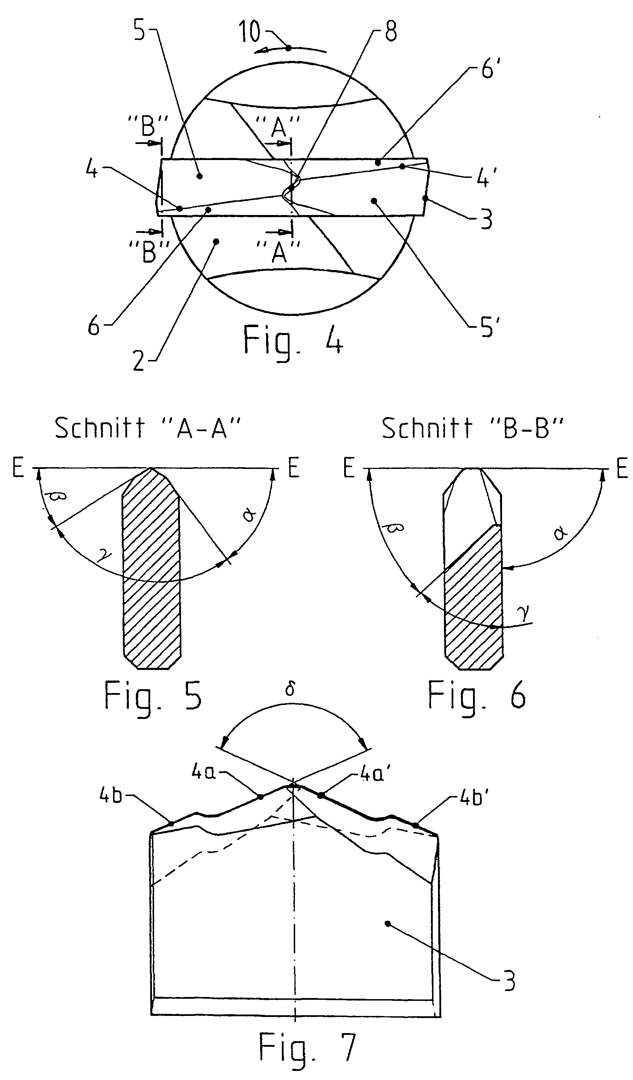

Der Keilwinkel γ ergänzt sich mit dem Spanwinkel α und dem Freiwinkel β auf 180°. Erfindungsgemäß nimmt bei jeder Schneidkante -4-, -4'- der Freiwinkel β mit zunehmendem Abstand von der Drehachse D kontinuierlich zu, während der Keilwinkel γ mit zunehmendem Abstand von der Drehachse D kontinuierlich abnimmt, wodurch sich ein spiralförmiger Verlauf der Freiflächen -5-, -5'- ergibt. Daraus resultiert, dass sich der Spanwinkel α entlang der Schneidkante -4-, -4'von etwa 60° im Zentrum des Bohrers auf etwa 90° am Umfang des Bohrers ändert. Der Freiwinkel β beträgt im Zentrum des Bohrers etwa 30° und am Umfang der Schneidplatte -3- etwa 40°. Dies ist in vergrößerter Ansicht durch den Schnitt A-A in Figur 5 sowie den Schnitt B-B in Figur 6 dargestellt. Es hat sich als zweckmäßig bei Gesteinsbohrern herausgestellt, die Schneidkanten -4-, -4'- im Zentrum des Bohrers nicht direkt ineinanderlaufen zu lassen, sondern diese Schneidkanten -4-, -4'- etwas außermittig zu versetzen und über eine Querschneide -8- miteinander zu verbinden.

Da die Schnittgeschwindigkeit im Zentrum des Bohrers 0 ist erfolgt durch die Drehbewegung des Bohrers normalerweise kein optimaler Materialabtrag mehr. Durch die Ausbildung einer Querschneide wird in Verbindung mit der Schlagbewegung des Bohrers eine Meißelwirkung erreicht, die auch im kritischen Zentrumsbereich einen guten Materialabtrag gewährleistet.
Für einen guten Bohrfortschritt soll diese Querschneide -8- aber nicht zu groß ausgeführt werden. Wie in der Draufsicht auf den erfindungsgemäßen Bohrer in Figur 4 zu sehen ist, nehmen die Spanflächen -6-, -6'- in ihrer Breite vom Umfang des Bohrers zum Zentrum hin zu, so dass sich eine kurze Querschneide -8- ergibt.

Die Figur 7 zeigt eine Variante einer Schneidplatte für einen erfindungsgemäßen Bohrer.
Die stirnseitigen Schneidkanten -4-, -4'- der Schneidplatte -3- sind zweiteilig ausgeführt, und zwar aus geraden Mittelabschnitten -4a-, -4a'-, die einen Spitzenwinkel δ von 130° miteinander einschließen sowie aus geraden Umfangsabschnitten -4b-, -4b'-.
Die Umfangsabschnitte -4b-, -4b'- überragen die Mittelabschnitte -4-, -4a- in Bohrvorschubrichtung und weisen die gleiche Neigung wie die Mittelabschnitte -4a-, -4a'- auf.
Durch eine derartige Ausführung werden die Bereiche der Schneidkante am Bohrerumfang, die besonders starkem Verschleiß unterliegen, zusätzlich verstärkt.

## Patentansprüche

1. Schneidplatte (3) für einen Bohrer zum Bohren von Gestein mit einem länglichen Schaft (2) und einer Drehachse D, welche an einem Ende des Schaftes (2) angeordnet ist und welche mindestens eine vom Umfang zur Drehachse D des Bohrers verlaufende stirnseitige Schneidkante (4,4') aufweist, wobei die Schneidkante (4,4') unter Bildung eines Keilwinkels y von einer aneinandergrenzenden Freifläche (5,5') und Spanfläche (6,6') gebildet wird und wobei die Freifläche (5,5') einen Freiwinkel β sowie die Spanfläche (6,6') einen Spanwinkel α mit einer zur Drehachse D senkrechten Ebene E einschließt und der Keilwinkel γ = 180°-(α + β),
**dadurch gekennzeichnet,**
**dass** der Freiwinkel β der Schneidkante (4,4') zumindest abschnittsweise mit zunehmendem Abstand von der Drehachse D zunimmt und der Keilwinkel γ zumindest abschnittsweise mit zunehmendem Abstand von der Drehachse D abnimmt

2. Schneidplatte (3) nach Anspruch 1, **dadurch gekennzeichnet, dass** der Freiwinkel β und der Keilwinkel γ kontinuierlich zu- bzw. abnehmen.

3. Schneidplatte (3) nach Anspruch 1 oder 2, **dadurch gekennzeichnet, dass** der Freiwinkel β im Bereich der Drehachse D etwa 30° und am Umfang des Bohrers etwa 40° beträgt und dass der Keilwinkel γ im Bereich der Drehachse D etwa 90° und am Umfang des Bohrers etwa 50° beträgt.

4. Schneidplatte (3) nach einem der Ansprüche 1 bis 3, **dadurch gekennzeichnet, dass** die Schneidplatte (3) zwei gerade stimseitige Schneidkanten (4,4') aufweist, die einen Spitzenwinkel δ von etwa 130° miteinander einschließen.

5. Schneidplatte(3) nach Anspruch 4, **dadurch gekennzeichnet, dass** die stirnseitigen Schneidkanten (4,4') zweiteilig mit jeweils einem geraden Mittelabschnitt (4a,4a') und einem geraden Umfangsabschnitt (4b,4b') ausgeführt sind, wobei der Umfangsabschnitt (4b,4b') den Mittelabschnitt (4a,4a') in Bohrvorschubrichtung überragt und mit gleicher Neigung wie der Mittelabschnitt (4a, 4a') verläuft.

6. Bohrer zum Bohren von Gestein, der mit wenigstens einer Schneidplatte (3) nach einem der Ansprüche 1 bis 5 bestückt ist.

## Claims

1. Cutting tip (3) for a drill bit for drilling rock with a relatively long shank (2) and an axis of rotation D, the cutting tip being arranged at one end of the shank (2) and having at least one cutting edge (4, 4') running from the circumference to the axis of rotation D of the drill bit, the cutting edge ('4, 4') being formed from an adjoining flank (5, 5') and rake face ( 6, 6' ) , these in turn forming a wedge, angle γ, and the flank (5,5') enclosing a clearance angle β and the rake face a rake angle α with a plane E perpendicular to the axis of rotation D and the wedge angle γ = 180° - (α + β) **characterised in that** the clearance angle β of the cutting edge (4, 4') increases with increasing distance from the axis of rotation D, at least in some regions, and the wedge angle γ decreases with increasing distance from the axis of rotation D, at least in some regions.

2. Cutting tip (3) according to claim 1, **characterised in that** the clearance angle β and the wedge angle γ increase and/or decrease continuously.

3. Cutting tip (3) according to claim 1 or 2 **characterised in that** the clearance angle β is approximately 30° in the region of the axis of rotation D and approximately 40° in the region of the circumference of the drill bit and that the wedge angle γ is approximately 90° in the region of the axis of rotation D and approximately 50° at the circumference of the drill bit.

4. Cutting tip (3) according to one of claims 1 to 3, **characterised in that** the cutting tip (3) has two straight, face side cutting edges (4, 4') which together enclose a tip angle δ of approximately 130°.

5. Cutting tip (3) according to claim 4, **characterised in that** the face side cutting edges (4, 4') are in two parts, each having one straight central region (4a, 4a') and one straight circumferential region (4b, 4b'), the circumferential region (4b, 4b') projecting beyond the central region (4a, 4a') in'the direction in which drilling is advancing and with the same inclination as the central section (4a, 4a').

6. Drill bit for drilling stone which is fitted with at least, one cutting tip (3) according to one of claims 1 to 5.

## Revendications

1. Plaquette de coupe (3) pour un foret à forer de la pierre comportant une queue allongée (2) et un axe de rotation D, laquelle est agencée sur une extrémité de la queue (2) et pourvue d'au moins une arête tranchante frontale (4, 4') allant de la périphérie jusqu'à l'axe de rotation D du foret, dans laquelle l'arête tranchante (4, 4') est constituée, en formant un angle de tranchant gamma, d'une face de dépouille (5, 5') et d'une face d'attaque (6, 6') adjacentes l'une à l'autre, et dans laquelle la face de dépouille (5, 5') forme avec un plan E perpendiculaire à l'axe de rotation D un angle de dépouille bêta et la face d'attaque (6, 6') un angle de dégagement alpha, et dans laquelle l'angle de tranchant gamma est égal à 180 degrés moins (alpha + bêta), **caractérisée en ce que** l'angle de dépouille bêta de l'arête tranchante (4, 4') augmente, au moins partiellement, à mesure que croît la distance par rapport à l'axe de rotation D, et que l'angle de tranchant gamma diminue, au moins partiellement, à mesure que croît cette distance par rapport à l'axe de rotation D.

2. Plaquette de coupe (3) selon la revendication 1, **caractérisée en ce que** les angles de dépouille bêta et de tranchant gamma respectivement augmentent ou diminuent de façon continue.

3. Plaquette de coupe (3) selon la revendication 1 ou 2, **caractérisée en ce que** l'angle de dépouille bêta est d'environ 30 degrés près de l'axe de rotation D et d'environ 40 degrés à la périphérie du foret, et que l'angle de tranchant gamma est d'environ 90 degrés près de l'axe de rotation D et d'environ 50 degrés à la périphérie du foret.

4. Plaquette de coupe (3) selon l'une quelconque des revendications 1 à 3, **caractérisée en ce que** la plaquette de coupe (3) comporte deux arêtes tranchantes frontales droites (4, 4') qui forment entre elles un angle de pointe delta d'environ 130 degrés.

5. Plaquette de coupe (3) selon la revendication 4, **caractérisée en ce que** les arêtes tranchantes frontales (4, 4') sont réalisées en deux parties, chacune comportant une partie centrale droite (4a, 4a') et une partie périphérique droite (4b, 4b'), la partie périphérique (4b, 4b') dépassant la partie centrale (4a, 4a') en direction de l'avancement du foret tout en présentant la même inclinaison que la partie centrale (4a, 4a').

6. Foret à forer de la pierre équipé d'au moins une plaquette de coupe (3) selon l'une quelconque des revendications 1 à 5.
